# EUROPEAN PATENT APPLICATION

(11) **EP 1 759 829 A1**
(43) Date of publication of application: **07.03.2007**
(21) Application number: 06119586.3
(22) Date of filing: 25.08.2006
(51) Int. Cl.: B29D 30/00, B29D 30/54, C08J 3/28

(54) **Method of preparing a tire using a plasma treatment**

(30) Priority: 31.08.2005 US 216896
(71) Applicant: THE GOODYEAR TIRE & RUBBER COMPANY, Akron, Ohio 44316-0001 (US)
(72) Inventor: Majumdar, Ramendra Nath, Hudson, Ohio OH 44236 (US); Lukich, Lewis Timothy, Akron, Ohio OH 44313 (US)
(74) Representative: Kutsch, Bernd

(57) **Abstract**

A method of preparing a rubber tire component for use in a tire manufacturing process is disclosed. The process includes providing relative motion between the tire component (10) and a plasma treatment device (12) so as to plasma treat a surface of the tire component (10). The method may be used to increase the tack and/or the adhesion of the tire component (10) so as to eliminate or reduce the use of solvent-based tire cements in the tire manufacturing process. The method may further be used to increase the wettability of the tire component (10) so as to allow water-based compounds, such as water-based tire cements and striping inks, to be used in the tire manufacturing process.

## Description

This invention generally relates to a method for preparing a tire, and more particularly to a method of treating various rubber components of a tire using plasma technology.

### Background of the Invention

The tire manufacturing process involves initially adhering various rubber components together to form a tire assembly, which is subsequently vulcanized through increased pressure and temperature to form a tire with the rubber components sufficiently adhered together. Such a process requires that at least some of the rubber components have certain properties. For example, two such properties of importance for tire manufacturing are tack and adhesion. The rubber components should have sufficient tack so that the various rubber components may be properly positioned in the tire assembly prior to the curing process. Additionally, once cured, the rubber components must be sufficiently adhered to each other. Many rubber components in the tire manufacturing process do not inherently have the necessary tack or adhesion properties required for tire manufacturing. Consequently, an adhesive, commonly referred to as tire cement, is often used to, for example, improve the tack of the rubber components when forming the tire assembly.

By way of example, in some new tire manufacturing processes, an aged, uncured tire tread is generally adhered to a tire carcass prior to vulcanization of the tire assembly. The cut-to-length tire tread is wrapped around the carcass and the ends placed together to form a splice. However, the rubber composition of many tire treads lack sufficient tack along the splice to allow the tire assembly to be formed. Thus, tire cement is often used along the splice to increase the tack between the two ends of the tire tread and therefore allow the tire assembly to be formed. The tire assembly subsequently forms a tire having good adhesion upon curing.

Typically, tire cements that provide both sufficient tack and adhesion generally include volatile organic compounds (VOCs), i.e., solvents, therein. For environmental and other health reasons, existing governmental regulations, or soon to be implemented regulations, manufacturers will need to limit the exposure and release of VOCs. Thus, to be in regulatory compliance, manufacturers have to install expensive solvent recovery systems, which increase overall production costs.

The use of solvent-based tire cement is not limited to new tire manufacturing processes but is also used in tire re-treading processes, such as cold-process re-treading. In this process, a tire carcass is buffed to remove excess rubber and to provide a substantially evenly textured crown for receiving a pre-cured tread strip. After being buffed, the tire carcass is sprayed with tire cement that provides a tacky surface for application of a suitable layer of bonding material, such as a cushion gum layer. Conventionally, the cushion gum is a layer of uncured rubber material placed over the crown. Then a cured tread strip, typically of a width corresponding to the width of the crown of the tire carcass, is cut to the length corresponding to the carcass circumference and is disposed over the carcass crown. Tire cement may be applied to the underside of the tire tread prior to positioning the tread over the carcass. As explained above, the rubber composition of many tire treads lack sufficient tack along the splice, thus necessitating the use of tire cement along the ends of the tire tread. The assembly, which comprises the tire carcass, the cushion gum and the tread, is then placed within a curing chamber and subjected to elevated pressure and temperature for a predetermined period of time to bind the cushion gum to both the tire carcass and the tire tread and to bind the tire tread to itself along the splice. Again, to provide suitable tack and adhesion, the tire cement typically used in the re-treading process includes VOCs that must be removed with an associated solvent recovery system.

Solvent-based materials are also used in other aspects of tire manufacturing, such as conventional tire marking processes. Carbon black filled rubber compositions in a tire building plant are desirably identified so that a pre-selected tread compound is applied to each tire type. Tread identification is also used to confirm at specified time intervals that the correct tread compound is being applied to the appropriate tire type. If the identification is applied to the outside of the tread and if the identification is designed to remain during tire curing or vulcanization, then the tire tread composition can be identified by visual inspection.

Tire manufacturers currently use inks (pigments, binder, and solvents) to identify the one or more tread compositions within a tire building plant. Often the ink is applied longitudinally along the hot tread after it is shaped by molding or extrusion. Although solvent-based inks have certain advantages, such as fast drying times, durability, good substrate wetting, good adhesion to the substrate, and good visibility of the resulting coating, the VOCs in the ink pose disadvantages in regard to governmental regulation compliance and costs of removing the VOCs from the work environment.

Water-based compounds, such as water-based tire cements and water-based striping inks, are known in the industry and are desirable for use in the tire building process, as water-based compounds contain substantially no solvents or other VOCs. Nevertheless, the use of water-based compounds in the tire building process has heretofore been limited. One major factor for the limited use of water-based compounds in various tire building processes is that water-based compounds do not readily wet the surface of many rubber compounds. As a result, when a water-based compound, such as tire cement or ink, is placed on a rubber tire component, such as the tire tread, the water-based compound typically forms well-defined liquid droplets instead of forming a thin, uniform layer of liquid that coats the surface of the rubber tire component. The inability of the water-based compounds to sufficiently coat or wet the surface of the tire components results in diminished functionality and results.

Accordingly, there is a need for an improved method of tire preparation that overcomes these and other drawbacks of conventional methods.

### Summary of the Invention

The invention provides an improved method of treating or preparing a rubber tire component for use in the tire manufacturing process. The method includes providing relative motion between the tire component and a plasma treatment device and plasma treating a surface of the tire component with the plasma treatment device in response to the relative motion.

The plasma treated surface of the rubber tire component may include features or properties that are advantageous in various aspects of the tire manufacturing process. For instance, the process may be configured such that plasma treating the surface changes the wettability of the tire component. Additionally, the process may be configured such that plasma treating the surface changes the tack and/or the adhesion of the tire component. Rubber tire components that may benefit from such treatment may include an uncured tire tread, a pre-cured tire tread, a cushion gum or a tire carcass. These tire components may be implicated in new tire manufacturing processes, tire re-tread processes, tire tread marking processes and other tire manufacturing processes.

In one embodiment of the invention, a method of manufacturing a tire includes providing relative motion between a rubber tire tread and a plasma treatment device and plasma treating a surface of the tire tread with the plasma treatment device in response to the relative motion. The tire tread is then applied to a rubber tire carcass to form a tire assembly that is subsequently vulcanized to form the tire. The tire tread is applied to the tire carcass so that the ends of the tire tread are joined along a splice. In this embodiment, at least one end of the tire tread has been plasma treated to increase the tack along the splice thereby allowing the tire assembly to be formed without the use of any tire cement. In an alternate embodiment, plasma treating the ends of the tire tread may also increase the wettability of the treated surface such that a water-based cement sufficiently coats the tire tread and further provides good adhesion in the formed tire. In either embodiment, the use of solvent-based tire cements may be avoided or reduced thereby eliminating or reducing the costs associated with solvent recovery systems.

In another embodiment, the inventive method may be used in a tire re-tread process. To this end, a tire carcass may be buffed to provide a suitable surface onto which a new and typically pre-cured tire tread is applied. A cushion gum is typically applied to the tire carcass prior to applying the tire tread. To increase the tack and/or adhesion between the cushion gum and the tire carcass, at least a portion of the inner surface of the cushion gum or at least a portion of the outer surface of the tire carcass may be plasma treated by providing relative motion between the cushion gum and/or the tire carcass and a plasma treatment device. By plasma treating at least a portion of the inner surface of the cushion gum and/or at least a portion of the outer surface of the tire carcass, the use of tire cement therebetween may be avoided. Alternately, plasma treating the cushion gum and/or the tire carcass may increase the wettability of the rubber tire components such that a water-based tire cement may be used therebetween. Again, in either case, the use of solvent-based tire cements is avoided or reduced.

In addition to the above, the inventive method may be further used in the tire re-tread process. For instance, tire cement is typically applied to at least a portion of the outer surface of the cushion gum or at least a portion of the inner surface of the tire tread to facilitate bonding the two rubber tire components. The plasma treatment process may be used to eliminate or reduce the use of tire cement between the tire tread and the cushion gum. To this end, at least a portion of the outer surface of the cushion gum or at least a portion of the inner surface of the tire tread may be plasma treated by providing relative motion between the cushion gum and/or the tire tread and a plasma treatment device. Plasma treating the cushion gum and/or the tire tread may also allow a water-based tire cement to be used. Additionally, the inventive method may be further used in the tire re-tread process to eliminate or reduce the use of tire cement along the splice created by joining the ends of the tire tread, similar to that described above. The inventive method may also be used to allow a water-based tire cement to be used along the splice.

In yet another embodiment of the invention, a method of manufacturing a tire having one or more markings on the rubber tire tread includes providing relative motion between a rubber tire tread and a plasma treatment device and plasma treating a surface of the tire tread with the plasma treatment device in response to the relative motion. At least one colored ink marking is then applied to the plasma treated surface of the tire tread. In an advantageous aspect of the invention, plasma treating the tire tread increases the wettability of the tire tread such that a water-based striping ink may be used to mark the tread instead of solvent-based striping inks.

In one embodiment, the tire tread is applied to a rubber tire carcass to form a tire assembly wherein the colored ink marking is visible. The colored ink markings are preferably applied to the tire tread prior to applying the tire tread to the tire carcass. The tire assembly may then be vulcanized to form a tire. In another embodiment of the invention, the colored ink marked tire tread may be vulcanized separate from the tire carcass, to form a pre-cured colored ink marked tire tread that may be subsequently applied to a cured tire carcass, such as during a tire re-treading process.

These and other objects, advantages and features of the invention will become more readily apparent to those of ordinary skill in the art upon review of the following detailed description.

### Brief Description of the Drawings

The accompanying drawing illustrates embodiments of the invention and, together with a general description of the invention given above, and the detailed description given below, serves to explain the invention.

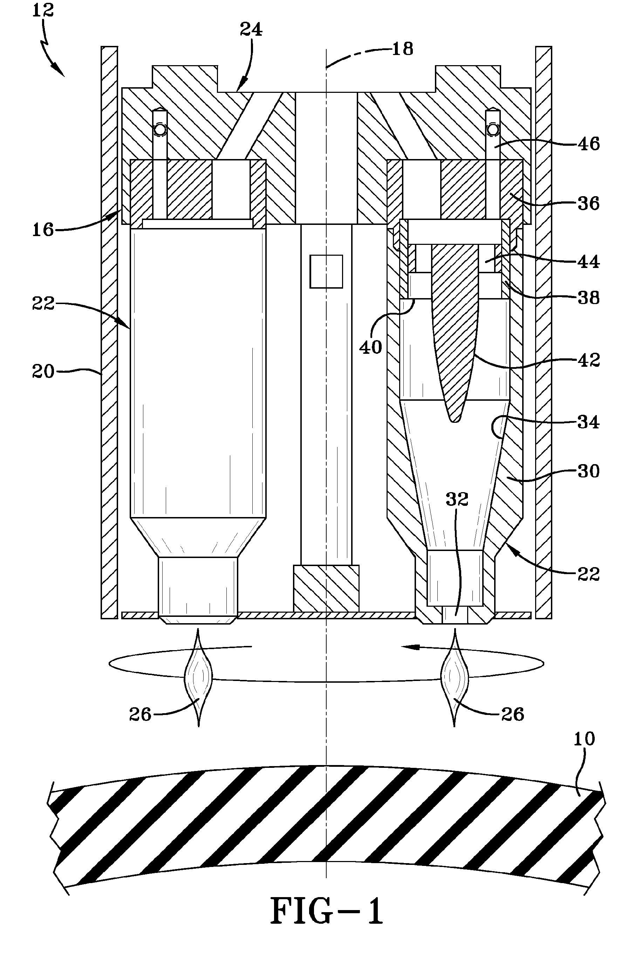

Fig. 1 is a schematic diagram of a plasma treatment device for plasma treating rubber tire components according to various embodiments of the invention.

### Detailed Description

A current practice for manufacturing a new tire is to stitch a cut-to-length, aged, uncured tire tread to a tire carcass and to form a splice by joining the ends of the tire tread. The tire tread and carcass form a tire assembly that is subsequently vulcanized to form a tire. To form the tire assembly, it is generally necessary that the rubber tire components have sufficient tack so as to at least initially maintain the tire components within the assembly and prior to vulcanization. However, many rubber compounds used in the tire manufacturing process lack the necessary tack to complete the assembly. Consequently, various adhesives, referred to in the industry as tire cement, having the necessary tack are typically applied along the splice so that the tire assembly may be formed. Once the tire assembly is vulcanized, the rubber components are sufficiently adhered together along the splice. As is known in the art, solvent-based tire cements are typically used along the splice of the tire tread to increase the tack while forming the tire assembly.

An improvement in the above process involves preparing the rubber tire tread so as to increase its tack and/or adhesion so as to eliminate or reduce the application of a solvent-based tire cement along the tread splice. Eliminating or reducing the solvent-based tire cement from the tire manufacturing process may eliminate or at least reduce the burden on the tire manufacturer to comply with existing or soon-to-be implemented government regulations limiting exposure and release of VOCs in the work environment. Moreover, the costs associated with installing and operating solvent recovery systems may be avoided or reduced.

With this in mind, and in one embodiment of the invention, the tack of the tire tread may be increased by plasma treating the tire tread prior to stitching the tire tread to the tire carcass. In particular, at least one, and preferably both ends of the cut-to-length tire tread may be plasma treated. To this end, and as schematically shown in Fig. 1, a portion of the tire tread 10 may be moved relative to a plasma treatment device 12 so as to plasma treat one or more surfaces of the tire tread 10. For instance, the ends of the tire tread may be plasma treated. Plasma treating the ends of the tire tread has the advantageous effect of increasing the tack of the tire tread along the treated surface. As recognized by those of ordinary skill in the art, the plasma treatment device 12 may be configured so that plasma treating the tire tread increases the tack along the splice so as to allow the tire assembly to be formed. In this way, and in an advantageous aspect of the invention, the use of a solvent-based adhesive along the splice in the tire tread may be eliminated or reduced.

A suitable plasma treatment device 12 in accordance with the invention may be that shown and described in US-B- 6,265,690. As known by those skilled in the art, traditional plasma treatment often requires the use of a vacuum, which has heretofore limited the use of plasma in the tire manufacturing process. The plasma treatment, as disclosed in the US-B-6,265,690 requires no vacuum and as such, is more conducive to the tire manufacturing process. The vacuum-less plasma treatment is often referred to as flume or open-air plasma. In a preferred embodiment of the invention, flume plasma is used to treat the rubber tire component, such as a tire tread.

As more fully discussed in the above mentioned patent, the plasma treatment device 12 includes a rotating head 16 which rotates about its central axis 18 and is surrounded by a stationary cylinder 20 that protects the rotating head 16. The rotating head 16 includes two plasma nozzles 22 mounted to a distribution block 24. The nozzles 22 are adapted to emit plasma jets 26 in a direction parallel to axis 18. When the head 16 is moved relative to the tire tread 10, and rotates with a high speed of revolution, the plasma jets 26 sweep relatively uniformly over a stripe on a surface of the tire tread 10.

Each plasma nozzle 22 has an essentially cylindrical metal casing 30 tapered towards the mouth 32 and forming a vortex channel 34 conically tapered towards the mouth 32. The mouth 32 of the plasma nozzle 22 is again significantly restrained in comparison to the internal cross section of the vortex channel 34. The upstream end of the casing 30 is rigidly connected to an adaptor 36 made of metal and embedded in the distributor block 24. A ceramic tube 38 is coaxially disposed in the adaptor 36 and the end of the casing 30 adjacent thereto and accommodates a swirl ring 40, which is electrically insulated from the adaptor 36 and the casing 30. The swirl ring 40 forms an electrode pin 42 which projects into the vortex channel 34 and is surrounded by a crest of swirl orifices 44. The adaptor 36 and the distributor block 24 are formed with gas passages 46 for supplying working gas to the plasma nozzles 22. The adaptor 36 and the distributor block 24 further comprise cable passages for high voltage cables (not shown), which supply voltage to the swirl ring 40 and the electrode pin 42.

In operation, pressurized air is supplied as a working gas via the gas passages 46. The pressurized air passes through the swirl orifices 44 of the swirl ring 40 and is swirled thereby so that it flows through the vortex channel 34 to the mouth 32 of the plasma nozzle 22 in a vortex fashion. An AC voltage of several kV having a frequency of, for example, 20 kHz is applied to the electrode pin 42, whereas the casing 30 of the plasma nozzle 22 is grounded via the distributor block 24. When the voltage is switched on, the high frequency at first creates a corona discharge between the swirl ring 40 and the ceramic tube 38 serving as a dielectricum. This corona discharge then ignites an arc discharge between the electrode pin 42 and the casing 30. The electric arc will, however, not pass radially from the electrode pin 42 to the surrounding wall of the casing 30, but instead is entrained by the swirling gas flow and is channeled in the core of the gas vortex, so that is passes from the electrode pin 42 straight along the central axis 18 of the vortex channel 34 to the mouth 32, and it is only then that it is radially branched towards the edge of the mouth 32. This has the desired result that a highly reactive and well-focused plasma jet is formed, which nevertheless is relatively cool and, in addition, thanks to its swirling motion, will mate with the surface of the tire tread 10.

While the apparatus disclosed described above is the preferred embodiment of an apparatus for plasma treating a rubber tire component, the invention is not so limited as those of ordinary skill in the art will recognize other devices for plasma treating a surface that may be used according to the inventive method. Additionally, while in the above embodiment of the invention, plasma treating the tire tread may be used to increase the tack, those of ordinary skill in the art will recognize that plasma treating the tire tread may also be used to increase the adhesion in the tire once it is cured. Thus, for example, some rubber compounds for tire treads may include sufficient tack but lack sufficient adhesion upon curing. In these cases, the tire tread may be plasma treated prior to vulcanization so as to improve the adhesion in the cured tire. To this end, the plasma treatment device may be configured such that the tire tread has increased adhesion upon curing of the tire assembly.

In another embodiment of the invention, a tire tread may be plasma treated so as to increase the wettability of the tire tread. As is known in the art, many rubber-based compounds are characterized by having low wettability to many water-based compounds. As a result, when a water-based compound is applied to the surface of a tire tread, the water-based compound forms a plurality of well-defined beads or liquid droplets instead of forming a thin, uniform layer of liquid. Thus, many water-based compounds poorly coat rubber compounds, such as a tire tread, and hence have not been regularly used in the tire manufacturing process. For example, water-based tire cements, which are commercially available, are typically not used to improve the tack or adhesion along the splice of the tire tread due to the inability of the water-based cement to sufficiently coat the tire tread.

In an advantageous aspect of the invention, a tire tread may be plasma treated so as to increase the wettability of the tire tread to water-based compounds. In particular, at least one, and preferably both ends of the cut-to-length tire tread may be plasma treated. As recognized by those of ordinary skill in the art, the plasma treatment device 12, described above, may be configured so that plasma treating the tire tread increases the wettability along the splice. Plasma treating the tire tread in turn allows a water-based tire cement to be used along the splice and therefore, allow the tire assembly to be formed. This aspect may be particularly useful for those rubber compounds for which plasma treating the ends alone does not sufficiently increase the tack so as to allow the tire assembly to be formed. In these cases, a water-based tire cement may be used to further enhance the tack and thereby allow the tire assembly to be formed. By increasing the wettability of the tire tread to water-based compounds, such as water-based tire cements, the use of solvent-based adhesives may be eliminated or reduced in the tire manufacturing process.

In a similar manner, a current practice for manufacturing a re-treaded tire is to buff a tire carcass to remove excess rubber and to provide a suitable surface onto which a new and typically pre-cured tire tread is applied. The cut-to-length, pre-cured tire tread is stitched to the cured tire carcass and forms a splice by joining the ends of the tire tread. In the re-tread process, however, an intermediate uncured polymeric layer, generally referred to as a cushion gum layer, is inserted between the tire carcass and the tire tread to facilitate bonding of the tread to the carcass. The tire tread, cushion gum and carcass form a tire assembly that is subsequently vulcanized to form a re-tread tire. To form the re-tread tire assembly, it is generally necessary that the rubber tire components have sufficient tack so as to at least initially maintain the tire components within the assembly prior to vulcanization. However, as with new tire manufacturing, many rubber compounds used in tire re-tread manufacturing processes lack the necessary tack to complete the tire assembly. Consequently, tire cements, and generally solvent-based tire cements, are typically used to form the re-tread tire assembly.

For instance, solvent-based tire cements are typically applied to either the outer surface of the tire carcass or the inner surface of the cushion gum, or possibly both, to improve the tack and/or adhesion therebetween. In addition, solvent-based tire cements may be applied to either the outer surface of the cushion gum or the inner surface of the tire tread, or possibly both, to improve the tack and/or adhesion therebetween. The resulting tire assembly is then vulcanized to form a re-treaded tire. Once the tire assembly is vulcanized, the rubber components are sufficiently adhered together to form the re-treaded tire.

An improvement in the tire re-tread process involves preparing one or more of the rubber components so as to increase their tack and/or adhesion so as to eliminate or reduce the application of a solvent-based tire cement. In another embodiment of the invention, the tack between the tire carcass and cushion gum may be increased by plasma treating the tire carcass, cushion gum or both. To this end, at least a portion of the outer surface of the tire carcass and/or at least a portion of the inner surface of the cushion gum may be plasma treated by providing relative motion between the tire carcass and/or the cushion gum and the plasma treatment device. Plasma treating the outer surface of the tire carcass and/or the inner surface of the cushion gum increases the tack of the tire carcass and/or the cushion gum along the treated surface. As recognized by those of ordinary skill in the art, the plasma treatment device may be configured so that plasma treating the tire carcass and/or the cushion gum increases the tack along the interface between the two rubber components. In this way, and in an advantageous aspect of the invention, the use of solvent-based adhesives along the tire carcass/cushion gum interface may be eliminated or reduced.

As mentioned above, a solvent-based tire cement may be applied to either the outer surface of the cushion gum or the inner surface of the tire tread to facilitate bonding therebetween. In another embodiment of the invention, the tack between the cushion gum and tire tread may be increased by plasma treating the cushion gum, tire tread or both. To this end, at least a portion of the outer surface of the cushion gum and/or at least a portion of the inner surface of the tire tread may be plasma treated by providing relative motion between the cushion gum and/or the tire tread and the plasma treatment device. Plasma treating the outer surface of the cushion gum and/or the inner surface of tire tread increases the tack of the rubber components along the treated surface. As recognized by those of ordinary skill in the art, the plasma treatment device may be configured so that plasma treating the cushion gum or tire tread increases the tack along the interface between the two rubber components. In this way, and in an advantageous aspect of the invention, the use of solvent-based adhesives along the cushion gum/tire tread interface may be eliminated or reduced.

The tire re-treading process also includes a splice along the ends of the cut-to-length tire tread and therefore may benefit from the present invention. In a manner similar to that discussed above for new tire treads, at least one, and preferably both ends of the pre-cured tire tread may be plasma treated to increase the tack of the tire tread along the splice. To this end, a portion of the tire tread may be moved relative to a plasma treatment device so as to plasma treat one or both ends of the tire tread. Plasma treating the ends of the tire tread has the advantageous effect of increasing the tack of the tire tread along the treated surface. As recognized by those of ordinary skill in the art, the plasma treatment device may be configured so that plasma treating the tire tread increases the tack along the splice so as to allow the re-tread tire assembly to be formed. In this way, and in an advantageous aspect of the invention, the use of solvent-based adhesives along the splice in the tire tread may be eliminated or reduced.

In another embodiment of the invention, the rubber components in the tire re-tread process may be plasma treated so as to increase the wettability of the rubber components. In particular, the tire carcass, cushion gum or tire tread may be plasma treated to increase the wettability of these components to water-based compounds. As recognized by those of ordinary skill in the art, the plasma treatment device may be configured so that plasma treating the rubber components increases their wettability. Plasma treating the rubber components in turn allows a water-based tire cement to be used along the interfaces between the rubber components, i.e., between the tire carcass and cushion gum and between the cushion gum and tire tread, as well as the splice in the tire tread. This aspect may be particularly useful for those rubber compounds for which plasma treating the rubber components alone does not sufficiently increase the tack so as to allow the re-tread tire assembly to be formed. In these cases, the water-based tire cements may be used to further enhance the tack and thereby allow the re-tread tire assembly to be formed. By increasing the wettability of the rubber components, such as the tire carcass, cushion gum and/or tire tread, to water-based compounds, the use of solvent-based adhesives may be eliminated or reduced in the tire re-tread manufacturing process.

The present invention may be beneficial in other tire manufacturing processes as well. For example, the invention may be used in tire marking processes. As previously explained, tire manufacturers currently use solvent-based striping inks to mark tires so as to identify tread composition or to identify other aspects of the tire. Although water-based striping inks are commercially available, their use in tire marking processes has been limited due to the inability of the water-based striping ink to coat or sufficiently wet the tire tread or other rubber components that make up a tire.

In yet another embodiment of the invention, the inventive method may be utilized to improve the wettability of the tire tread that is subsequently to be marked with a colored striping ink. In particular, the tire tread may be moved relative to a plasma treatment device so as to plasma treat one or more surfaces of the tire tread. Plasma treating the tire tread has the advantageous effect of increasing the wettability of the tire tread along the treated surface. In this way, the increased wettability allows a water-based striping ink to be used instead of the solvent-based striping inks currently used. One or more colored marks may be applied to the tire tread so as to identify the tread in a tire building plant. In a preferred embodiment of the invention, the tire tread is marked as part of the tread manufacturing process, such as after the tread has been shaped by molding or extrusion. The invention is not so limited as the tire tread may be marked at a later time as well. The marked tire tread may be applied to the tire carcass and the tire assembly vulcanized to form a tire. In another embodiment of the invention, the marked tire tread may be vulcanized separate from the tire carcass to form a pre-cured marked tire tread. The pre-cured, marked tire tread may be applied to a cured tire carcass during, for example, a tire re-treading process.

### Example 1

The effect of plasma treating various uncured tire tread compounds was determined using two typical aircraft tire tread compounds identified as samples A and B. In particular, each sample was plasma treated using a rotational plasma treatment device as described above. The samples were approximately 3/8" from the device and had a relative speed of approximately 3 m/min past the plasma device. Each sample made two passes beneath the plasma device. After being treated, the positive pressure tack (measured in Newtons per inch) and cured adhesion (measured in Newtons per 5 mm) were determined for each sample. A subjective measure of the tear, i.e., smooth, knotty or a combination of the two, was also noted. Table 1 provides the results of the test.

**TABLE 1**

| Sample | Plasma Treated | Aging | Tack (N/inch) | Adhesion (N/5 mm) (Tear) |
|---|---|---|---|---|
| A | Yes | None | 2.62 | 148 (Smooth) |
| A | No | None | 2.01 | 234 (Knotty) |
| A | Yes | 3 day exposure (after treatment) | 3.49 | 198 (Smooth-Knotty) |
| A | No | 3 day exposure (after treatment) | 1.55 | 249 (Knotty) |
| A | Yes | 3 day exposure (before treatment) | 1.87 | 218 (Knotty) |
| A | No | 3 day exposure (before treatment) | 1.55 | 236 (Knotty) |
| B | Yes | None | 2.52 | 134 (Knotty) |
| B | No | None | 2.82 | 147 (Knotty) |
| B | Yes | 3 day exposure (after treatment) | 3.5 | 153 (Knotty) |
| B | No | 3 day exposure (after treatment) | 2.17 | 154 (Knotty) |
| B | Yes | 3 day exposure (before treatment) | 6.65 | 133 (Knotty) |
| B | No | 3 day exposure (before treatment) | 2.17 | 138 (Knotty) |

As can be seen from Table 1, when Sample B was aged for three days prior to treatment, the difference between the untreated and plasma treated tests indicates a significant increase in tack (from 2.17 N/inch to 6.65 N/inch) without a significant decrease in the cured adhesion (from 138 N/5 mm to 133 N/5 mm). Thus, for this test, the tack increased by approximately 300% while the cured adhesion decreased by just over 3%.

The effect of plasma treatment on the wettability of the two samples was also determined. For both Samples A and B, when water was sprayed on the untreated surface, the water formed well-defined liquid droplets thus indicating poor wettability. After plasma treatment, water was again sprayed onto the treated surface and a thin, uniform layer of water was formed on the surface indicating good wettability.

### Example 2

The effect of plasma treating a pre-cured tire tread compound was determined using a typical aircraft tire tread compound: sample C. In particular, the sample was plasma treated using a rotational plasma treatment device as described above. The sample was approximately 3/8" from the device and had a relative speed of approximately 12 m/min past the plasma device. The sample made a single pass beneath the plasma treatment device. Water was sprayed on the pre-cured sample prior to plasma treatment and the water formed well-defined droplets indicating poor wettability. After being treated, water was again sprayed onto the sample and formed a thin, uniform layer of water indicating good wettability of the pre-cured tire tread compound.

### Example 3

The effect of plasma treatment in the tire re-tread process was determined by measuring the tack (instant subjective tack) and cured adhesion between a buffed tire casing and a solventless cushion gum, which is disclosed in US-B- 5,503,940. In particular, an aged tire casing and the cushion gum were individually plasma treated using a rotational plasma treatment device as described above. Each component was approximately 1/2" from the device and had a relative speed of approximately 50 m/min past the plasma device. Each sample made two passes beneath the plasma device. After being treated, the instant subjective tack and cured adhesion were determined for each sample. Table 2 provides the results of the test.

**TABLE 2**

| Treated Surface | Instant Subjective Tack | Cured Adhesion (N/5 mm) (Tear) |
|---|---|---|
| None (Control) | Medium | 24 (Smooth) |
| Casing | Medium | --- |
| Cushion Gum | Very High | 50 (Knotty) |

As can be seen from Table 2, plasma treatment of the cushion gum indicates a very high instant subjective tack and a significant increase in the cured adhesion. In particular, the cured adhesion doubled (from 24 N/5 mm to 50 N/5 mm) and the tack noticeably increased (from medium to very high) relative to the control case when the cushion gum was plasma treated.

## Claims

1. A method of preparing a rubber tire component adapted for use in a tire manufacturing process, comprising:
providing relative motion between the tire component (10) and a plasma treatment device (12); and
plasma treating a surface of the tire component (10) with the plasma treatment device (12) in response to the relative motion to provide a plasma treated surface on the tire component.

2. The method of claim 1, wherein plasma treating the surface of the tire component further comprises:
configuring the plasma treatment to increase the wettability of the tire component, increase the tack of the tire component, or increase the adhesion of the tire component.

3. The method of claim 1 or 2, further comprising:
applying at least one of a water-based tire cement and a water-based striping ink to the plasma treated surface of the tire component.

4. The method of at least one of the previous claims, further comprising:
applying the tire tread to a rubber tire carcass to form a tire assembly; and
vulcanizing the tire assembly to form a tire.

5. The method of claim 4, wherein applying the tire tread to the tire carcass further comprises:
joining the ends of the tire tread such that the plasma treated surface is along a splice defined by the joined ends of the tire tread; and
applying a water-based tire cement along the splice prior to vulcanizing the tire assembly.

6. The method of claim 4 or 5, further comprising:
applying a cushion gum to the tire carcass prior to applying the tire tread;
providing relative motion between at least one of the cushion gum and the tire carcass and a plasma treatment device; and
plasma treating a surface of at least one of the cushion gum and the tire carcass with the plasma treatment device in response to the relative motion to provide a plasma treated surface on at least one of the cushion gum and the tire carcass prior to applying the cushion gum to the tire carcass.

7. The method of claim 6, further comprising:
providing relative motion between at least one of the cushion gum and the tire tread and a plasma treatment device; and
plasma treating a surface of at least one of the cushion gum and the tire tread with the plasma treatment device in response to the relative motion to provide a plasma treated surface on at least one of the cushion gum and the tire tread prior to applying the tire tread to the tire carcass.

8. The method of at least one of the previous claims, further comprising:
applying at least one colored ink marking on the plasma treated surface of the tire tread in order to provide one or more markings on the rubber tire tread for identification purposes.

9. The method of claim 8, wherein the colored ink is a water-based color ink.

10. The method of claim 8 or 9, further comprising:
applying the tire tread to a rubber tire carcass to form a tire assembly so that the at least one colored ink marking is visible from an outside of the tire assembly; and
vulcanizing the tire assembly to form a tire.
